# EUROPÄISCHE PATENTSCHRIFT

(11) **EP 3 427 365 B1**
(45) Veröffentlichungstag und Bekanntmachung des Hinweises auf die Patenterteilung: **19.01.2022**
(21) Anmeldenummer: 17709024.8
(22) Anmeldetag: 01.03.2017
(51) Int. Cl.: H02J 50/10, H04B 5/00, H02J 50/80

(54) **VERFAHREN ZU EINER INDUKTIVEN ENERGIEÜBERTRAGUNG**
METHOD FOR INDUCTIVE ENERGY TRANSMISSION
PROCÉDÉ DE TRANSMISSION D'ÉNERGIE PAR INDUCTION

(30) Priorität: 10.03.2016 DE 102016203937
(43) Veröffentlichungstag der Anmeldung: 16.01.2019
(73) Patentinhaber: Robert Bosch GmbH, 70442 Stuttgart (DE)
(72) Erfinder: MACK, Juergen, 73035 Goeppingen (DE)
(86) Internationale Anmeldenummer: PCT/EP2017/054775
(87) Internationale Veröffentlichungsnummer: WO 2017/153224

(56) Entgegenhaltungen:
- EP-A1- 2 953 271
- WO-A1-2015/197443
- US-A1- 2012 202 435

## Beschreibung

### Stand der Technik

Aus der US 2012/202435 A1 und der WO 2015/197443 A1 sind bereits Verfahren zu einer induktiven Energieübertragung, insbesondere zum Laden eines Energiespeichers, bekannt, bei dem eine Induktionseinheit zumindest ein Synchronisierungssignal aussendet. Dabei wird in zumindest einem Synchronisierungsschritt zumindest eine Signalkenngröße des Synchronisierungssignals durch eine Steuer- und/oder Regeleinheit der Induktionseinheit eingestellt, wobei die Signalkenngröße von einer Signalleistung, einer Signalspannung, einem Signalstrom, einer Signaldauer und/oder einer Signalfrequenz gebildet ist.

Es ist Aufgabe der Erfindung, ein Verfahren zur induktiven Energieübertragung gegenüber dem bekannten Stand der Technik derart weiter zu verbessern, dass eine zuverlässige und energieeffiziente Synchronisation zwischen der Induktionseinheit und einer entsprechenden Empfangseinheit, insbesondere des Energiespeichers, erfolgt.

### Offenbarung der Erfindung

Zur Lösung der Aufgabe wird vorgeschlagen, dass in zumindest einem Verfahrensschritt eine Sendefrequenz des Synchronisierungssignals derart in Abhängigkeit von einer Spannung einer Lastbetriebsspannungsquelle der Induktionseinheit eingestellt wird, dass die Sendefrequenz in einem von einer Resonanzfrequenz der induktiven Energieübertragung entfernten Frequenzbereich liegt. Auf diese Weise kann bei der Übertragung des Synchronisierungssignals das Einprägen einer zu hohen Spannung und/oder Leistung auf der Empfangseinheit vermieden werden. Durch das Einstellen einer Signalkenngröße des Synchronisierungssignals wird eine sichere und/oder zuverlässige Synchronisierung auch bei wechselnden Betriebsparametern erreicht. Vorzugsweise ist das Verfahren zu einem Laden von zumindest einem Energiespeicher für Handwerkzeugmaschinen, insbesondere von einer Mehrzahl von Energiespeichern für Handwerkzeugmaschinen, vorgesehen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Handwerkzeugmaschine" soll in diesem Zusammenhang insbesondere eine werkstück-bearbeitende Maschine, vorteilhaft jedoch eine Bohrmaschine, ein Bohr- und/oder Schlaghammer, eine Säge, ein Hobel, ein Schrauber, eine Fräse, ein Schleifer, ein Winkelschleifer, ein Gartengerät und/oder ein Multifunktionswerkzeug verstanden werden. Vorzugsweise weisen die zu ladenden Energiespeicher zumindest einen Akkupack auf. Vorzugsweise weisen die Energiespeicher eine Nennspannung von weniger als 50 V, bevorzugt von weniger als 40 V, besonders bevorzugt von weniger als 20 V auf. Vorzugsweise weisen die zu ladenden Energiespeicher eine Speicherkapazität von weniger als 10,0 Ah, bevorzugt von weniger als 5,0 Ah und besonders bevorzugt von weniger als 4,0 Ah Stunden auf. Unter einer "Induktionseinheit" soll in diesem Zusammenhang insbesondere eine elektronische Sendeeinheit, welche insbesondere dazu vorgesehen ist, eine insbesondere von einer Energiequelle, insbesondere von einem Energieversorgungsnetz, bereitgestellte elektrische Energie umzuformen und induktiv zu senden, und/oder eine elektronische Empfangseinheit, welche insbesondere dazu vorgesehen ist, eine induktiv übertragene elektrische Energie aufzunehmen und/oder zumindest temporär zu speichern, verstanden werden. Insbesondere weist die Induktionseinheit zumindest einen Schwingkreis auf, welcher insbesondere zumindest eine Spule, welche insbesondere dazu vorgesehen ist, ein magnetisches Wechselfeld zu erzeugen, und zumindest einen Resonanzkondensator umfasst.

Unter einem "Synchronisierungssignal" soll in diesem Zusammenhang insbesondere ein elektrisches, digitales oder analoges Signal, insbesondere zumindest ein Spannungssignal und/oder ein Stromsignal verstanden werden. Insbesondere ist das Synchronisierungssignal dazu vorgesehen, eine Empfangseinheit vor oder bei Beginn einer induktiven Energieübertragung von einem Schlaf- und/oder Stromsparmodus aufzuwecken, die Empfangseinheit in einen Empfangszustand zu versetzen und/oder die Empfangseinheit mit einer Sendeeinheit zu synchronisieren. Vorzugsweise ist das Synchronisierungssignal dazu vorgesehen, die Empfangseinheit nach einer Unterbrechung einer induktiven Energieübertragung, insbesondere einer Unterbrechung zum Zweck einer Fremdobjekterkennung, von einem Schlaf- und/oder Stromsparmodus aufzuwecken, in einen Empfangszustand zu versetzen und/oder die Empfangseinheit mit einer Sendeeinheit zu synchronisieren. Vorzugsweise ist das Synchronisierungssignal in Form eines Impulses, insbesondere mit einer Impulsdauer zwischen 1 ms und 20 ms, ausgebildet. Vorzugsweise weist das Synchronisierungssignal einen Leistungsverlauf auf, welcher zumindest im Wesentlichen als ein Rechteckimpuls ausgebildet ist. Insbesondere weicht der Leistungsverlauf des Synchronisierungssignals zu weniger als 20 %, vorzugsweise zu weniger als 10 % und besonders bevorzugt weniger als 5 % von einem Rechteckimpuls ab. In diesem Zusammenhang soll unter einer "Signalkenngröße" insbesondere eine Kenngröße des Synchronisierungssignals verstanden werden, die beispielsweise von einer Signalleistung, einer Signalspannung, einem Signalstrom, einer Signaldauer und/oder einer Signalfrequenz gebildet ist. Insbesondere wird die Signalkenngröße des Synchronisierungssignals in Abhängigkeit von zumindest einem Betriebsparameter der Induktionseinheit, beispielsweise einer Netzeingangsspannung, einer Spannungsklasse eines zu ladenden Energiespeichers, einem Abstand zwischen einer Sendeeinheit und einer Empfangseinheit und/oder einer Ausrichtung zwischen einer Sendeeinheit und einer Empfangseinheit.

Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden.

Ferner wird vorgeschlagen, dass die Induktionseinheit in zumindest einem Verfahrensschritt zur Aussendung des zumindest eines Synchronisierungssignals mit einer Konstantspannungsquelle verbunden wird, die zumindest im Wesentlichen unabhängig von einer Lastbetriebsspannungsquelle ausgebildet ist. Unter einer "Lastbetriebsspannungsquelle" soll insbesondere eine Spannungsquelle verstanden werden, welche dazu vorgesehen ist, die Induktionseinheit während einer induktiven Energieübertragung mit elektrischer Energie zu versorgen. Insbesondere ist die Lastbetriebsspannungsquelle ein Energieversorgungsnetz. Unter einer "Konstantspannungsquelle" soll in diesem Zusammenhang insbesondere eine Spannungsquelle verstanden werden, welche eine zeitlich zumindest im Wesentlichen konstante Spannung liefert. Insbesondere ist die von der Konstantspannungsquelle gelieferte Spannung zumindest im Wesentlichen von einem angeschlossenen Verbraucher. Insbesondere wird die Induktionseinheit vor oder während des Verfahrensschritts zur Aussendung des zumindest eines Synchronisierungssignals insbesondere vor einer Verbindung mit der Konstantspannungsquelle von der Lastbetriebsspannungsquelle getrennt. Hierdurch kann vorteilhaft eine annähernd gleichbleibende Spannung zur Aussendung des Synchronisierungssignals, insbesondere auch bei einer schwankenden Ausgangsspannung der Lastbetriebsspannungsquelle, bereitgestellt werden.

Des Weiteren wird vorgeschlagen, dass in zumindest einem weiteren Synchronisierungsschritt zumindest ein weiteres Synchronisierungssignal erzeugt wird, das zumindest im Wesentlichen eine gleiche Maximalspannung in einer Empfangseinheit wie das Synchronisierungssignal erzeugt. Insbesondere weicht eine Maximalspannung des weiteren Synchronisierungssignals um maximal 10 %, vorzugsweise um maximal 5 % und besonders bevorzugt um maximal 2 % von einer Maximalspannung des Synchronisierungssignals ab. Hierdurch kann eine vorteilhaft zuverlässige insbesondere zyklische Synchronisierung erreicht werden.

Ferner wird vorgeschlagen, dass die Sendefrequenz in zumindest einem Verfahrensschritt in Abhängigkeit von einer Reaktion einer Empfangseinheit iterativ verändert wird. Vorzugsweise wird die jeweilige Sendefrequenz iterativ an eine Resonanzfrequenz angenähert. Insbesondere wird die Sendefrequenz ausgehenden von einem Startwert, welcher empfängerseitig einem niedrigen Resonanzspannungswert entspricht, schrittweise der Resonanzfrequenz angenähert, bis ein Antwortsignal einer Empfängereinheit empfangen wird. Alternativ kann die jeweilige Sendefrequenz auf eine Resonanzfrequenz eingestellt und daraufhin iterativ von der Resonanzfrequenz entfernt werden. Insbesondere kann die Sendefrequenz ausgehenden von einem Startwert, welcher zumindest im Wesentlichen der Resonanzfrequenz entspricht, schrittweise solange aus der Resonanz heraus verschoben werden wie gerade noch eine Antwort einer Empfängereinheit empfangen wird. Hierdurch kann eine vorteilhaft sichere Synchronisierung zwischen einer Sendeeinheit und einer Empfängereinheit erreicht werden.

Des Weiteren wird vorgeschlagen, dass die Sendedauer des Synchronisierungssignals eingestellt wird. Vorzugsweise wird die Sendedauer in Abhängigkeit von einer Spannung einer Lastbetriebsspannungsquelle der Induktionseinheit eingestellt. Hierdurch kann insbesondere bei einer schwankenden Spannung einer Lastbetriebsspannungsquelle eine vorteilhaft sichere Synchronisierung erfolgen.

Ferner wird vorgeschlagen, dass die Signalkenngröße in Abhängigkeit vom Typ der Empfangseinheit eingestellt wird. Insbesondere kann eine Induktionseinheit einen Typ der Empfangseinheit insbesondere automatisch mittels einer Codierung erkennen. Alternativ oder zusätzlich kann ein Typ der Empfangseinheit durch einen Bediener unmittelbar an der Induktionseinheit eingestellt werden. Hierdurch kann eine vorteilhafte Einstellung der Signalkenngröße an der Empfängereinheit mit unterschiedlichen Betriebsparametern ermöglicht werden.

Ferner werden eine Induktionseinheit sowie eine Induktionsladevorrichtung mit einer entsprechenden Induktionseinheit zur Durchführung des erfindungsgemäßen Verfahrens vorgeschlagen. Die Induktionseinheit umfasst zumindest eine Steuer- und/oder Regeleinheit, einen Schwingkreis und eine Lastbetriebsspannungsquelle. Vorzugsweise ist die Induktionsladevorrichtung zu einem Laden von zumindest einem Energiespeicher für Handwerkzeugmaschinen, insbesondere von einer Mehrzahl von Energiespeichern für Handwerkzeugmaschinen, vorgesehen. Vorzugsweise weist die Induktionsladevorrichtung zumindest eine Empfangseinheit auf, die dazu vorgesehen ist, das Synchronisierungssignal zu empfangen. Durch eine derartige Ausgestaltung kann eine Induktionsladevorrichtung mit vorteilhaften Eigenschaften hinsichtlich einer Synchronisation mit einer Empfangseinheit bereitgestellt werden.

Das erfindungsgemäße Verfahren soll hierbei nicht auf die oben beschriebene Anwendung und Ausführungsform beschränkt sein. Insbesondere kann das erfindungsgemäße Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung einer Induktionsladevorrichtung mit einer Induktionseinheit und einer Empfangseinheit,
- Fig. 2: einen zeitlichen Verlauf eines Ladevorgangs,
- Fig. 3: eine schematische Darstellung der Umschalteinheit zur Umschaltung zwischen einer Lastbetriebsspannungsquelle und einer Konstantspannungsquelle,
- Fig. 4: in einem Diagramm die Resonanzspannung über der Frequenz für mehrere anregende Spannungen und
- Fig. 5: in einem Diagramm eine notwendige Veränderung der Frequenz der anregenden Spannung zur Erlangung einer gleichbleibenden Resonanzspannung bei unterschiedlichen Spannungswerten der anregenden Spannung.

### Beschreibung des Ausführungsbeispiels

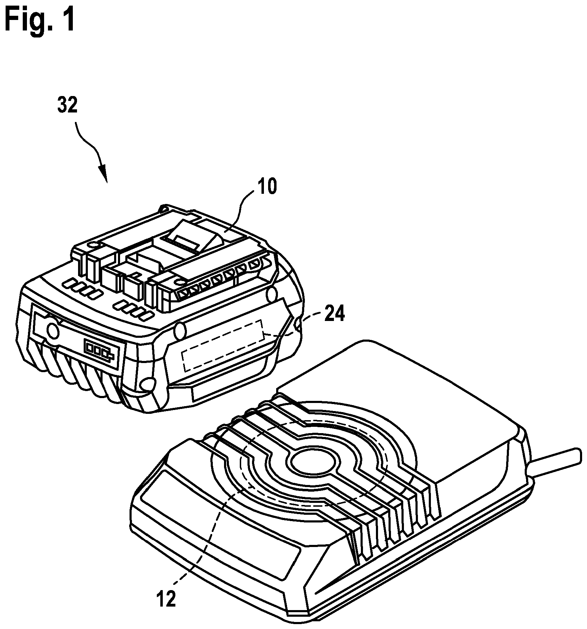

Figur 1 zeigt eine perspektivische Darstellung einer Induktionsladevorrichtung 32 mit einer Induktionseinheit 12 und einer Empfangseinheit 24. Die Empfangseinheit 24 ist in eine Energiespeichereinheit 10, integriert. Die Induktionsladevorrichtung 32 ist zu einem induktiven Laden der Energiespeichereinheit 10 vorgesehen. Die Energiespeichereinheit 10 ist als ein Handwerkzeugmaschinenakku ausgebildet. Die Induktionseinheit 12 ist dazu vorgesehen, während eines Ladevorgangs elektrische Energie an die Empfangseinheit 24 zu übertragen. Hierzu wird die Energiespeichereinheit 10 auf die Induktionseinheit 12 der Induktionsladevorrichtung 32 aufgelegt.

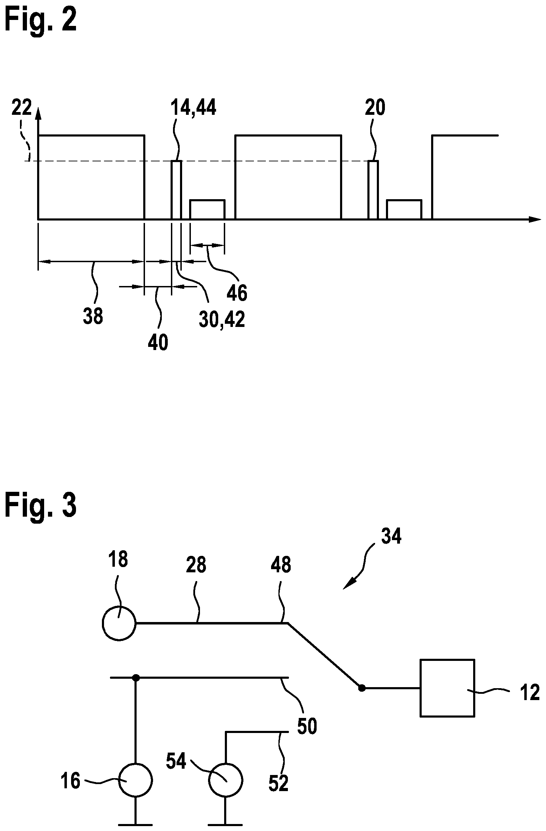

Während eines Ladens der Energiespeichereinheit 10 wird eine Energieübertragung zwischen der Induktionseinheit 12 und der Empfangseinheit 24 zyklisch unterbrochen. Insbesondere wird die Energieübertragung zwischen der Induktionseinheit 12 und der Empfangseinheit 24 zur Durchführung einer Fremdobjekterkennung zyklisch unterbrochen. Eine Unterbrechung der Energieübertragung während eines Ladevorgangs ist notwendig, da nicht ausgeschlossen werden kann, dass während einer Energieübertragung zwischen der Induktionseinheit 12 und der Empfangseinheit 24 Fremdobjekte, insbesondere Fremdobjekte, welche sich aufgrund des während des Ladevorgangs vorhandenen magnetischen Wechselfelds erwärmen können, zwischen die Induktionseinheit 12 und die Empfangseinheit 24 gelangen. Figur 2 zeigt einen zeitlichen Verlauf eines Ladevorgangs. In einer erste Phase 38 des Ladevorgangs erfolgt eine Energieübertragung zwischen der Induktionseinheit 12 und der Empfangseinheit 24. In einer zweiten Phase 40 wird die Energieübertragung zur Durchführung der Fremdobjekterkennung unterbrochen. In einer dritten Phase 42 wird ein Synchronisierungssignal 14 von der Induktionseinheit 12 an die Empfangseinheit 24 gesendet. Die Synchronisierungssignale 14, 20 sind in Form eines Impulses 44 ausgebildet. Der Impuls 44 weist insbesondere eine Impulsdauer zwischen 1 ms und 20 ms auf. Das Synchronisierungssignal 14 weist einen Leistungsverlauf und/oder Spannungsverlauf auf, welcher zumindest im Wesentlichen als ein Rechteckimpuls ausgebildet ist. Das Synchronisierungssignal 14 ist dazu vorgesehen, die Empfangseinheit 24 nach der Unterbrechung der Energieübertragung zum Zweck einer Fremdobjekterkennung von einem Schlaf- und/oder Stromsparmodus aufzuwecken, in einen Empfangszustand zu versetzen und/oder die Empfangseinheit 24 mit der Induktionseinheit 12 zu synchronisieren. Auf das Synchronisierungssignal 14 folgt eine Kommunikationsphase 46. Die Kommunikationsphase 46 dient beispielsweise dazu, eine Übertragungsleistung zwischen der Induktionseinheit 12 und der Empfangseinheit 24 festzulegen. Im Anschluss an die Kommunikationsphase 46 wird die Energieübertragung zwischen der Induktionseinheit 12 und der Empfangseinheit 24 wieder aufgenommen. Der beschriebene Ablauf wird während eines Ladevorgangs zyklisch wiederholt. Weitere von der Induktionseinheit 12 erzeugte Synchronisierungssignale 20, erzeugen eine zumindest im Wesentlichen gleiche Maximalspannung 22 in der Empfangseinheit 24 wie das erste erzeugte Synchronisierungssignal 14.

In einem Synchronisierungsschritt wird zumindest eine Signalkenngröße des Synchronisierungssignals 14 eingestellt. Insbesondere wird eine Signalkenngröße des Synchronisierungssignals 14 eingestellt, um insbesondere auch bei schwankenden Netzspannungen und/oder anderen Störbeeinflussungen während einer Übertragung von Synchronisierungssignalen 14, 20 in der Empfangseinheit 24 eine konstante Spannung zu erreichen. Eine konstante Spannung in der Empfangseinheit 24 während einer Übertragung von Synchronisierungssignalen 14, 20 ist notwendig, um ein sicheres Aufwecken und/oder Synchronisieren der Empfangseinheit 24 zu gewährleisten. Um eine konstante Spannung in der Empfangseinheit 24 während einer Übertragung von Synchronisierungssignalen 14, 20 zu erreichen, wird die Induktionseinheit 12 in einem Verfahrensschritt zur Aussendung der Synchronisierungssignalen 14, 20 mit einer Konstantspannungsquelle 16 verbunden. Die Konstantspannungsquelle 16 ist vorzugsweise eine stabilisierte Spannungsquelle. Die Konstantspannungsquelle 16 ist zumindest im Wesentlichen unabhängig von einer Lastbetriebsspannungsquelle 18 ausgebildet, mit welcher die Induktionseinheit 12 während einer Energieübertragung verbunden wird. Die Induktionsladevorrichtung 32 weist eine Umschalteinheit 34 auf, die dazu vorgesehen ist, die Induktionseinheit 12 alternativ mit der Lastbetriebsspannungsquelle 18 oder mit der Konstantspannungsquelle 16 zu verbinden. Figur 3 zeigt eine schematische Darstellung der Umschalteinheit 34. Die Umschalteinheit 34 weist drei Schaltpositionen 48, 50, 52 auf. In der ersten Schaltposition 48 ist die Impulseinheit mit der Lastbetriebsspannungsquelle 18 verbunden, welche dazu vorgesehen ist, eine Spannung 28 für die Energieübertragung zwischen der Induktionseinheit 12 und der Empfangseinheit 24 bereitzustellen. In der zweiten Schaltposition 50 ist die Induktionseinheit 12 mit der Konstantspannungsquelle 16 verbunden, welche dazu vorgesehen ist, eine Spannung zur Ausendung der Synchronisierungssignale 14, 20 bereitzustellen. In der dritten Schaltposition 52 ist die Induktionseinheit 12 mit einer weiteren Konstantspannungsquelle 54 verbunden, welche dazu vorsehen ist, eine Spannung für die Kommunikationsphase 46 bereitzustellen.

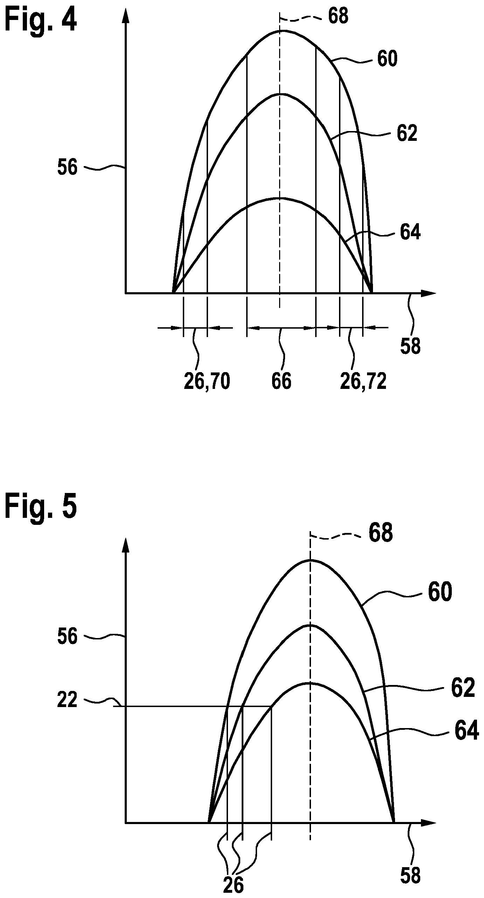

Alternativ oder zusätzlich zu einer Umschaltung zwischen der Lastbetriebsspannungsquelle 18 und der Konstantspannungsquelle 16 kann in zumindest einem Verfahrensschritt eine Sendefrequenz 26 des Synchronisierungssignals 14, 20 eingestellt werden. Die Sendefrequenz 26 kann in Abhängigkeit von einer Spannung 28 der Lastbetriebsspannungsquelle 18 der Induktionseinheit 12 eingestellt werden. In Figur 4 ist in einem Diagramm die Resonanzspannung 56 über der Frequenz 58 für mehrere anregende Spannungen 60, 62, 64 dargestellt. Eine Energieübertragung zwischen der Induktionseinheit 12 und der Empfangseinheit 24 findet üblicherweise in einem Frequenzbereich 66 nahe der Resonanzfrequenz 68 statt. Prinzip bedingt bildet sich dabei eine Resonanzspannung 56 nahe einer maximalen Resonanzspannung aus. Um bei einer Übertragung eines Synchronisierungssignals 14, 20 nicht eine zu hohe Spannung und/oder Leistung auf der Empfangseinheit 24 einzuprägen, wird die Induktionseinheit 12, insbesondere ein Schwingkreis der Induktionseinheit 12, während einer Aussendung eines Synchronisierungssignals 14, 20 mit einer Sendefrequenz 26 angeregt, welche in einem von der Resonanzfrequenz 68 entfernten Frequenzbereich 70, 72 liegt. Figur 5 zeigt für einen fest vorgegebenen Spannungswert 74 der Synchronisierungssignale 14, 20 auf, wie die Sendefrequenz 26 der anregenden Spannung 60, 62, 64 verändert werden muss, um eine Variation einer Maximalspannung 22 der Synchronisierungssignale 14, 20 bei einer vorgegebenen anregenden Spannung 60, 62, 64 auszugleichen. Alternativ kann die Sendefrequenz 26 in Abhängigkeit von einer Reaktion der Empfangseinheit 24 iterativ verändert werden. Vorzugsweise wird die Sendefrequenz 26 iterativ an eine Resonanzfrequenz 68 angenähert. Insbesondere wird die Sendefrequenz 26 ausgehenden von einem Startwert, welcher empfängerseitig einem niedrigen Resonanzspannungswert entspricht, schrittweise der Resonanzfrequenz 68 angenähert, bis ein Antwortsignal einer Empfangseinheit 24 empfangen wird. Alternativ kann die jeweilige Sendefrequenz 26 auf eine Resonanzfrequenz 68 eingestellt und daraufhin iterativ von der Resonanzfrequenz 68 entfernt werden. Insbesondere kann die Sendefrequenz 26 ausgehenden von einem Startwert, welcher zumindest im Wesentlichen der Resonanzfrequenz 68 entspricht, schrittweise solange aus der Resonanz heraus verschoben werden, wie gerade noch eine Antwort einer Empfangseinheit 24 empfangen wird.

Alternativ oder zusätzlich zu dem bereits genannten kann in zumindest einem Verfahrensschritt eine Sendedauer 30 der Synchronisierungssignale 14,20 eingestellt werden. Die Sendedauer 30 wird in Abhängigkeit von einer Spannung 28 einer Lastbetriebsspannungsquelle 18 der Induktionseinheit 12 eingestellt. Zudem ist es alternativ oder zusätzlich denkbar, dass die Signalkenngröße in Abhängigkeit vom Typ einer Empfangseinheit 24 eingestellt wird. Insbesondere kann die Induktionseinheit 12 einen Typ der Empfangseinheit 24 insbesondere automatisch mittels einer Codierung erkennen. Alternativ oder zusätzlich kann ein Typ der Empfangseinheit 24 durch einen Bediener unmittelbar an der Induktionseinheit 12 eingestellt werden.

## Patentansprüche

1. Verfahren zu einer induktiven Energieübertragung, insbesondere zum Laden eines Energiespeichers (10), bei dem eine Induktionseinheit (12) zumindest ein Synchronisierungssignal (14) aussendet, wobei in zumindest einem Synchronisierungsschritt zumindest eine Signalkenngröße des Synchronisierungssignals (14) eingestellt wird, wobei die Signalkenngröße von einer Signalleistung, einer Signalspannung, einem Signalstrom, einer Signaldauer und/oder einer Signalfrequenz gebildet ist, wobei die Induktionseinheit (12) eine Steuer- und/oder Regeleinheit aufweist, welche die Signalkenngröße des Synchronisierungssignals (14, 20) einstellt, **dadurch gekennzeichnet, dass** in zumindest einem Verfahrensschritt eine Sendefrequenz (26) des Synchronisierungssignals (14, 20) derart in Abhängigkeit von einer Spannung (28) einer Lastbetriebsspannungsquelle (18) der Induktionseinheit (12) eingestellt wird, dass die Sendefrequenz (26) in einem von einer Resonanzfrequenz (68) der induktiven Energieübertragung entfernten Frequenzbereich (70, 72) liegt.

2. Verfahren nach Anspruch 1, **dadurch gekennzeichnet, dass** die Induktionseinheit (12) in zumindest einem Verfahrensschritt zur Aussendung des zumindest einen Synchronisierungssignals (14) mit einer Konstantspannungsquelle (16) verbunden wird, die unabhängig von der Lastbetriebsspannungsquelle (18) ausgebildet ist.

3. Verfahren nach Anspruch 1 oder 2, **dadurch gekennzeichnet, dass** in zumindest einem weiteren Synchronisierungsschritt zumindest ein weiteres Synchronisierungssignal (20) erzeugt wird, das eine gleiche Maximalspannung (22) in einer Empfangseinheit (24) wie das Synchronisierungssignal (14) erzeugt.

4. Verfahren zumindest nach einem der vorhergehenden Ansprüche, **dadurch gekennzeichnet, dass** die Sendefrequenz (26) in zumindest einem Verfahrensschritt in Abhängigkeit von einer Reaktion einer Empfangseinheit (24) iterativ verändert wird.

5. Verfahren nach einem der vorhergehenden Ansprüche, **dadurch gekennzeichnet, dass** in zumindest einem Verfahrensschritt eine Sendedauer (30) des Synchronisierungssignals (14,20) eingestellt wird.

6. Verfahren nach Anspruch 5, **dadurch gekennzeichnet, dass** die Sendedauer (30) in Abhängigkeit von der Spannung (28) der Lastbetriebsspannungsquelle (18) der Induktionseinheit (12) eingestellt wird.

7. Verfahren nach einem der vorhergehenden Ansprüche, **dadurch gekennzeichnet, dass** die Signalkenngröße in Abhängigkeit vom Typ einer Empfangseinheit (24) eingestellt wird.

8. Induktionseinheit (12) zur Durchführung des Verfahrens nach einem der vorhergehenden Ansprüche, umfassend zumindest eine Steuer- und/oder Regeleinheit, einen Schwingkreis und eine Lastbetriebsspannungsquelle (18).

9. Induktionsladevorrichtung (32) mit zumindest einer Induktionseinheit (12) nach Anspruch 8.

10. Induktionsladevorrichtung (32) nach Anspruch 9, **gekennzeichnet durch** zumindest eine Empfangseinheit (24), die dazu vorgesehen ist, das Synchronisierungssignal (14, 20) zu empfangen.

## Claims

1. Method for inductive energy transfer, in particular for charging an energy store (10), in which method an induction unit (12) transmits at least one synchronization signal (14), wherein in at least one synchronization step, at least one signal characteristic variable of the synchronization signal (14) is set, wherein the signal characteristic variable is formed by a signal power, a signal voltage, a signal current, a signal duration and/or a signal frequency, wherein the induction unit (12) has an open-loop and/or closed-loop control unit which sets the signal characteristic variable of the synchronization signal (14, 20), **characterized in that** in at least one method step, a transmission frequency (26) of the synchronization signal (14, 20) is set on the basis of a voltage (28) of a load operation voltage source (18) of the induction unit (12) in such a manner that the transmission frequency (26) lies in a frequency range (70, 72) remote from a resonant frequency (68) of the inductive energy transfer.

2. Method according to Claim 1, **characterized in that** the induction unit (12) is connected to a constant voltage source (16) in at least one method step for the transmission of the at least one synchronization signal (14), said constant voltage source being formed independently of the load operation voltage source (18).

3. Method according to Claim 1 or 2, **characterised in that** in at least one further synchronization step, at least one further synchronization signal (20), which generates the same maximum voltage (22) in a receiving unit (24) as the synchronization signal (14), is generated.

4. Method according to at least one of the preceding claims, **characterized in that** the transmission frequency (26) is iteratively changed in at least one method step on the basis of a response of a receiving unit (24).

5. Method according to one of the preceding claims, **characterized in that** in at least one method step, a transmission period (30) of the synchronization signal (14, 20) is set.

6. Method according to Claim 5, **characterized in that** the transmission period (30) is set on the basis of the voltage (28) of the load operation voltage source (18) of the induction unit (12).

7. Method according to one of the preceding claims, **characterized in that** the signal characteristic variable is set on the basis of the type of a receiving unit (24).

8. Induction unit (12) for carrying out the method according to one of the preceding claims, comprising at least one open-loop and/or closed-loop control unit, a resonant circuit and a load operation voltage source (18).

9. Induction charging apparatus (32) comprising at least one induction unit (12) according to Claim 8.

10. Induction charging apparatus (32) according to Claim 9, **characterized by** at least one receiving unit (24), which is intended to receive the synchronization signal (14, 20).

## Revendications

1. Procédé permettant de transmettre de l'énergie par induction, en particulier de charger un accumulateur d'énergie (10), dans lequel une unité d'induction (12) émet au moins un signal de synchronisation (14), dans lequel, dans au moins une étape de synchronisation, au moins une grandeur caractéristique de signal du signal de synchronisation (14) est réglée, la grandeur caractéristique de signal étant formée par une puissance de signal, une tension de signal, un courant de signal, une durée de signal et/ou une fréquence de signal, l'unité d'induction (12) présentant une unité de commande et/ou de régulation qui règle la grandeur caractéristique de signal du signal de synchronisation (14, 20),
**caractérisé en ce que** dans au moins une étape de procédé, une fréquence d'émission (26) du signal de synchronisation (14, 20) est réglée en fonction d'une tension (28) d'une source de tension de fonctionnement sous charge (18) dans l'unité d'induction (12) de telle sorte que la fréquence d'émission (26) se trouve dans une plage de fréquence (70, 72) éloignée d'une fréquence de résonance (68) de la transmission d'énergie par induction.

2. Procédé selon la revendication 1, **caractérisé en ce que** dans au moins une étape de procédé, pour l'émission dudit au moins un signal de synchronisation (14), l'unité d'induction (12) est reliée à une source de tension constante (16) qui est réalisée indépendamment de la source de tension de fonctionnement sous charge (18).

3. Procédé selon la revendication 1 ou 2, **caractérisé en ce que** dans au moins une autre étape de synchronisation, au moins un autre signal de synchronisation (20) est généré qui génère dans une unité de réception (24) une tension maximale (22) identique au signal de synchronisation (14).

4. Procédé au moins selon l'une quelconque des revendications précédentes, **caractérisé en ce que** dans au moins une étape de procédé, la fréquence d'émission (26) est modifiée de manière itérative en fonction d'une réaction d'une unité de réception (24).

5. Procédé selon l'une quelconque des revendications précédentes, **caractérisé en ce que** dans au moins une étape de procédé, une durée d'émission (30) du signal de synchronisation (14, 20) est réglée.

6. Procédé selon la revendication 5, **caractérisé en ce que** la durée d'émission (30) est réglée en fonction de la tension (28) de la source de tension de fonctionnement sous charge (18) de l'unité d'induction (12) .

7. Procédé selon l'une quelconque des revendications précédentes, **caractérisé en ce que** la grandeur caractéristique de signal est réglée en fonction du type d'une unité de réception (24).

8. Unité d'induction (12) permettant d'exécuter le procédé selon l'une quelconque des revendications précédentes, comprenant au moins une unité de commande et/ou de régulation, un circuit oscillant et une source de tension de fonctionnement sous charge (18).

9. Dispositif de charge par induction (32), comprenant au moins une unité d'induction (12) selon la revendication 8.

10. Dispositif de charge par induction (32) selon la revendication 9, **caractérisé par** au moins une unité de réception (24) qui est prévue pour recevoir le signal de synchronisation (14, 20).
